# EUROPEAN PATENT SPECIFICATION

(11) **EP 2 803 302 B1**
(45) Date of publication and mention of the grant of the patent: **30.12.2015**
(21) Application number: 13167663.7
(22) Date of filing: 14.05.2013
(51) Int. Cl.: A47J 36/02, C09D 183/04, D06F 75/38, C23C 18/12

(54) **Chemically stable, stain-, abrasion- and temperature-resistant, easy-to-clean sol-gel coated metalware for use in elevated temperatures**
Chemisch stabile, fleck-, abrieb- und temperaturbeständige, leicht zu reinigende Sol-Gel beschichtete Metallwaren zur Verwendung bei erhöhten Temperaturen
Objets métalliques revêtus d'une couche sol-gel chimiquement stable, résistant aux taches, à l'abrasion et à la température, facile à nettoyer, destinés à être utilisé à des températures élevées

(43) Date of publication of application: 19.11.2014
(73) Proprietor: Eksen Makine Sanayi ve Ticaret A.S., 41480 Kocaeli (TR)
(72) Inventor: Tahincioglu, Besim, 41480 Kocaeli (TR)
(74) Representative: Sevinç, Erkan

(56) References cited:
- EP-A1- 1 634 928
- WO-A1-2010/072814
- US-A1- 2005 247 915
- US-A1- 2010 178 491

## Description

### Technical Field of the Invention

The present invention relates to an easy-to-clean, stain resistant sol-gel coated metalware for use in elevated temperatures, and method for production thereof. The invention particularly relates to preparation and application of a mixture of substances and method for colorable, chemically stable, stain-, abrasion- and thermally-resistant, easy-to-clean layer formation for coating of metalware surfaces for use in elevated temperatures e.g. cook- fry- and/or bakeware or sole plate surfaces made of metals selected from the list comprising stainless steel, aluminum and alloys thereof in which aluminum is the principal or predominant ingredient.

### Background of the Invention

Chemical changes occurred by thermal processing of the food causes formation of sticky substances e.g. caramelisation products, which tend to adhere onto the hot surfaces as solid residues after evaporation of volatile compounds. The removal of these residues from the metalware surface is difficult in a regular kitchen, since the said residues contain usually chemically resistant substances against common solvents available in regular kitchens.

Cook- and bakeware with PTFE coated surfaces are widely available on the market, which is known with the non-sticking properties of PTFE. Still, PTFE is a soft material which cannot resist against abrasion applied with sharp metal objects, and consequently loses its form and position adjacent to carrier metallic surface. Additionally PTFE undergoes pyrolysis at ca. 200 deg.C, which causes evolution of fluorocarbon gases; and PTFE decomposes at around 350 deg.C. The gaseous products of these reactions are harmful for the health; and the solid products which remain on the metallic surfaces are very abrasion sensitive and tend to detach from the surface easily by rubbing, so that they can contaminate to the food upon further use of the cook-, fry- and/or bakeware.

EP 2 177 580 B1 describes a non-stick ceramic coating for cook-, fry- and/or bakeware, which is applied on metallic surface selected from a group consisting steel, aluminum, its alloys or an oxide layer (Al203/TiO2) covering the said surface.

WO 2008 010 639 A1 describes a cook-, fry- and/or bakeware covered with a ceramic coating applied on an aluminum oxide layer. The anodification step for establishing the said aluminum oxide layer increases the production costs of the said ware.

WO 2007 104 258 A1 describes a coating with multiple layers, top layer of which comprises fluorine. Plurality of coating layers bring along increased number of process steps and production costs. Additionally the top layer comprises fluorine which potentially causes negative health effects when detached from the surface and contaminated the food.

US 2011 293 950 A1 describes a sol-gel coating comprising multiple layers, bottom layer of which is provided in various colors and the bottom layer is adhered on aluminum or its alloys. The increased number of production process steps in association with multiple additional layers cause increments in time and process costs.

AU 2012 227 320 A1 describes colorable non-stick ceramic coating compositions and methods which employ fluoralkoxysilane and at least three mixing steps and an aging step. The employment of fluoralkoxysilane is still a sanitary threat if the cooking utensil coated with said ceramic composition is further used after its surface is once damaged. Moreover the mixture should be aged prior to application on metallic surface, which brings additional time cost to the cooking utensil production process.

### Objects of the Invention

A primary object of the present invention is to provide a stain-, abrasion- and temperature resistant, easy-to-clean coating for surfaces comprising metals of moderate conduction heat transfer coefficients selected from the list comprising stainless steel, aluminum and its alloys, which are frequently employed in heated surfaces suitable for use in food thermal processing e.g. cooking, baking etc. Another object of the present invention is to provide a coating with aforesaid properties, which is also colorable with addition of inorganic pigments.

Another object of the present invention is to provide a coating with aforesaid properties, which exhibits a moderate polarity.

Another object of the present invention is to provide a method for producing the said coating which is simple and cost effective by virtue of a monolayer coating with minimum process steps.

A further object of the present invention is to provide a method for producing a surface with a hard coating wherein the need for an additional oxide layer is eliminated.

Still a further object of the present invention is to provide a metalware for use in elevated temperatures e.g. food thermal processing device or iron sole plate including the base material of the invention.

### Summary of the Invention

The present invention proposes a metalware for use in elevated temperatures which comprises a coated metallic surface for domestic or industrial purposes, and specifically a metallic body coated with an inorganic polycondensate using a sol-gel process. The said metalware can be an iron sole plate or a food thermal processing metalware e.g. bakeware, cookware, tray, toaster etc.

More specifically, the invention relates to a device comprising a metallic surface which is a solid base material comprising iron and/or aluminum and a coating layer covering said solid material wherein the coating is a hydrolysis and polycondensation product of a composition comprising the following:
- dimethyl siloxane (DMS),
- amorphous silicon dioxide (SiO2), and
- water.

In preferred embodiments, said composition further comprises at least one silane derivative e.g. tetraethoxysilane (TEOS) and/or methyl trimethoxysilane (MTMS). The inventors also noted that silicon carbide (SiC) and aluminum oxide (Al2O3) make positive contributions to heat transfer properties of the final coating. The said coating can be further prepared by addition of inorganic pigments to the coating mixture for obtaining various optical appearances on the final product. In further preferred embodiments, the coating mixture is also provided with 1-ethyl-3-methylimidazolium methyl sulfate, which is asserted by the inventors as a catalyst by formation of the final coating.

The said metalware lacks any interlayer between the inorganic polycondensate coating and the metallic base surface; said metallic base surface and said inorganic polycondensate coating are in direct contact with each other without requiring an additional porous layer for adhesion.

### Detailed Description of the Invention

Several qualities can be linked together with devices such as pot, pan, grill, toast plate, baking tray etc. or iron sole plate having heated metallic surfaces which is in contact with food to be thermally processed or with textile to be ironed. Such devices can comprise metallic surfaces coated with a material which is usually desired to be glass-like, solid, hard, even and smooth, chemically inert, non-polar, stain-, abrasion- and temperature resistant in order to achieve ease of use and a long service time.

In order to provide a good adhesion between a metallic surface and the coating, the surface should be prepared prior to application of the coating solution. In order to achieve this, the subject surface of the metalware should be roughened if necessary, e.g. with abrasive blasting; and presumable residues (oils etc.) should be removed from the metallic surfaces prior to application of the coating. As an example for oily residues removal, sand blasted metallic surfaces to be cleaned can be washed with detergent solution and rinsed, followed by contacting to 0.1 mol/L nitric acid solution and triple rinsing with pure water.

The present invention proposes a metalware for use in elevated temperatures e.g. iron sole plate or metalware for food thermal processing, and specifically a cook-, fry- and/or bakeware coated with an inorganic polymer using a sol-gel process.

More specifically, the invention pertains to a metalware for use in elevated temperatures comprising a metallic surface wherein the said metal is selected from the list comprising stainless steel, aluminum and alloys thereof in which aluminum is the principal or predominant ingredient, and a coating layer covering said metallic surface wherein the coating is a hydrolysis and polycondensation product of a composition comprising the following:
- tetraethoxy silane (TEOS),
- methyl trimethoxy silane (MTMS),
- dimethyl siloxane (DMS),
- inorganic filler,
- a polar solvent, and
- 1,3-dialkyl imidazolium alkyl sulfate.

The hydrolysis and polycondensation reactions, as well known in the art with generic name of "sol-gel" can be catalyzed by suitable reagents. MTMS and TEOS serve as binding matrix in the coating solution according to the present invention.

In order to increase the crosslinking ratio within the inorganic polymer network according to the present invention, the said dimethyl siloxane is preferably a silanol-terminated polydimethyl siloxane (SiOH-terminated PDMS) to be crosslinked into the inorganic polymer network. The commercial SiOH-terminated PDMS with the product name DMS-S12 supplied by Gelest Inc. is employed by the inventors.

Water is prioritized amongst other polar solvents by the inventors e.g. ethanol and methanol, in order to provide minimized costs and health risks and thereto with respect to environmental considerations.

The method of the present invention preferably involves a sol-gel procedure which is catalyzed with 1,3-dialkyl imidazolium alkyl sulfates which are ionic liquid substances. In preferred embodiments, said 1,3-dialkyl imidazolium alkyl sulfate is 1-ethyl-3-methylimidazolium methyl sulfate, which is asserted by the inventors as a catalyst by formation of the final coating.

The reaction medium comprises mainly polar molecules; hence, in order to provide mobility and thus reactivity to the molecules in the said reaction medium, only polar solvents are suitable for the coating mixture according to the present invention. At least one of the solvents to be introduced into the coating mixture, selected from the group consisting water, ethanol and methanol are indicated as preferable by the inventors. Also alcohols form by the polycondensation of the silanes present in the coating mixture of the invention, which are considered by the inventors as additional solvents enhancing the progression of reaction.

Thermal conductivity of the coating on the metalware according to the present invention is of vital importance. Metalware according to the present invention are usually subjected to heating in order to implement food thermal processing or ironing of textiles. By food thermal processing, especially until the food material reaches the highest temperatures available during the said food thermal processing (e.g. baking), the side of the coating in contact with food material has a lower temperature compared to the opposite side of the said coating adhered to the heated surface of metalware according to the present invention. Because of the thermal expansion of the materials, the specific volume of said materials increases with increasing temperatures. With high thermal conductivity values, the heat energy is conducted rapidly throughout the material. Low thermal conductivity values of the coating material may cause defects on the coating layer because of the thermal expansion on said coating material; and higher thermal conductivity values protect the solid coating from said defects by providing similar temperatures and correlative specific volume values throughout the said solid coating matrix.

The composition of the coating according to the present invention comprises one or more inorganic filler (ceramic) selected from the group consisting of silicon carbide, boron carbide, boron nitride and oxides of silicon, titanium, aluminum, iron, manganese and cupper. These fillings provide improvement on the opacity, adherence and mechanical resistance of the coating according to the present invention. They also increase the viscosity of the coating mixture so that improved application facility of the said coating mixture on the metalware is achieved by addition of said fillings into the coating mixture.

The preferred particle size of silicon dioxide filler is in the range of 1-12 micrometers, and silicon dioxide can be added into the coating mixture in forms of dry powder and/or aqueous dispersion.

Some of the abovementioned inorganic fillers are also considered by the inventors as thermal conductivity adjustment agents. The thermal conductivity of the said coating mixture according to the present invention is enhanced by addition of thermal conductivity enhancers, preferably selected from the list comprising silicium carbide (SiC), aluminum oxide (Al2O3), and iron oxide pigments. In preferred embodiments the composition comprises a total weight percentage of said thermal conductivity agents in the range of 1-50, more preferably in the range of 10-40 and even more preferably in the range of 15-25. The preferred particle radii of SiC range from 0.1 µm to 4.0 µm, more preferably from 0.3 µm to 2 µm; and that of Al2O3 preferably ranges between 1 and 20 µm, more preferably between 3 and 13 µm.

Visual appearance of the final product according to the present invention may be adjusted by coloring the surface by adding colorants. In order to maintain the molecular structure of the colorants, said colorants may be chosen amongst inorganic pigments, which show significant refractivity compared to organic pigments under high temperatures to which the coated metalware is subjected during the heat treatment. The coating mixture can be provided with various inorganic pigments, in order to achieve final products coated surfaces in various colors.

After addition of the pigments into the coating mixture according to the present invention comprising TEOS, MTMS, DMS, inorganic filler and polar solvent, the pigment particles in the mixture should be dispersed by passing the said coating mixture through a grinding device e.g. pearl mill.

The coating mixture according to the present invention is to be applied on the surface of the metalware in a wet thickness in the range of 10-150 micrometers, and preferably in the range of 75-100 micrometers.

A preferred production sequence of the metalware according to the present invention is as follows:
- Providing a base material in form of a metalware having a roughened (e.g. sand blasted) and clean metallic surface, wherein the said metal is selected from moderate conduction heat transfer coefficient materials selected from the list comprising stainless steel, aluminum and alloys thereof in which aluminum is the principal or predominant ingredient
- mixing and stirring of a coating composition comprising TEOS, MTMS, DMS, a polar solvent, inorganic filler and 1,3-dialkyl imidazolium alkyl sulfate,
- grinding the said composition,
- applying the said coating composition on the said metallic surface,
- ageing of the coating composition on coated metallic surface under ambient conditions,
- polycondensation of the said coating by heat treatment on said metallic surface.

The coating mixture is applied on the prepared metallic surface of the metalware according to the present invention, preferably by spraying, and kept under ambient temperature (15-35 deg.C), preferably 20-25 deg.C, for 20-40 minutes, preferably for 25-35 minutes for partial evaporation of the solvent in the applied coating mixture. Meanwhile, polycondensation reactions partly occur under said conditions.

Afterwards the said coated metalware is subjected to thermal treatment in a furnace, preferably in an electric furnace set to temperatures in the range of 250-350 deg.C, preferably 290-310 deg.C, for 20-40 minutes, preferably for 25-35 minutes, for progression of the polycondensation reaction and formation of a solid coating film.

After taking the coated metalware according to the present invention from the furnace, the said metalware is cooled to ambient temperature. At the end of polycondensation reaction, the thickness of the solid coating film is preferably in the range of 20-60 micrometers, and more preferably 30-40 micrometers. Higher coating thicknesses are not recommended in order to prevent broad temperature profiles throughout the heat transfer direction when metalware is heated; since the temperature differences throughout the coating material may cause fractures on the solid coating matrix as mentioned above, which may result with abruption of the coating from the metallic surface. Likewise, coating thicknesses which are lower than the preferred values offered above may be insufficient to cover the roughened metallic surface completely, since the roughened metallic surface comprises protuberances which conceivably remain uncovered. The coating procedure can be repeated until obtaining the desired thickness.

### Example

A sandblasted metalware (frying pan) surface which is made of a material selected from the list comprising stainless steel, aluminum and alloys thereof in which aluminum is the principal or predominant ingredient, is prepared for application of coating according to the present invention, by following procedure:
The said sandblasted metalware is degreased for 15 minutes in an ultrasonic bath filled with aqueous 5% (w/w) solution of degreaser supplied under the commercial name P3 almeco-18, by Henkel AG; at 80 deg.C of temperature. Afterwards the said metalware is rinsed with water and then dipped into 10% (w/w) aqueous nitric acid solution followed by rinsing in three sequential deionized water basins and dried in stove.

According to the present invention, an example coating mixture of following formulation is prepared and stirred in a vessel.

| **Substance** | **Ratio (w/w %)** |
|---|---|
| 1-Ethyl-3-methylimidazolium methylsulfat | 0.37 |
| Silanol-terminated polydimethyl siloxane (PDMS) | 1.63 |
| Methyl trimethoxy silane (MTMS) | 27.16 |
| Tetraethoxy silane (TEOS) | 10.38 |
| Water | 14.35 |
| Titan dioxide (TiO2) | 20.69 |
| Glass powder (SiO2) | 14.67 |
| Aluminum Oxide (Al2O3) | 10.75 |
| TOTAL | 100 |

The coating mixture of the above formula is applied upon the said prepared metalware surface by spray coating and subjected to the following thermal programme is applied to the said metalware:
- Ageing under laboratory temperature (30 deg.C) for 30 minutes,
- heating in an electric heated furnace at 300 deg.C for 30 minutes,
- natural cooling into laboratory temperature.

The coated metalware was subjected to physicochemical tests listed and explained below. The test results overlap with the expectations.

| **Test type** | **Test results** | **Target results** |
|---|---|---|
| Abrasion resistance | 1.8-2.2 mg. | <2.1 mg |
| Surface hardness | >6-7N | >5N |
| Scratch hardness | 9H | 8H |
| Non-stick effect | no visible residues | no visible residues |
| Cross-cut adhesion | 4-5 B | 4-5 B |
| Thermal resistance (320 deg.C, 30 min) | no deformation | no deformation |
| Chemical resistance (pH=2 and 12) | no change | no change |
| Hydrophobicity (contact angle) | 85-88deg | >80deg |
| Oleophobicity (contact angle) | 20-23deg | <35deg |

The abrasion resistance test is performed according to British Standard B.S. 7069:1988. A coated plate according to the present invention is weighed prior to the test and the corresponding weight is noted for comparison with that at the end of the test procedure. Then said plate is placed into a rotary abrasion machine (Taber^{®} 5130 Abraser) according to ASTM D 7255. The said plate is mounted on a platform turning on a vertical axis against the sliding rotation of two abrading wheels, with one wheel rubbing the specimen toward the periphery, and the other rubbing inward toward the center. The test specimen was abraded using a load of 500 g, for 1000 cycles) using CS-10 abrasion wheel supplied with the abrasion machine. The said plate is then rinsed with water, dried and weighed. The difference between the weights before and after the procedure is calculated and used as test results.

Surface hardness test is performed using Erichsen Hardness Test Pencil 318S. After checking the tight fixing of the test body at the end of the load transmission bolt, the required force is adjusted on the scale using the locking screw slider. Then the tester is placed perpendicularly on the plate surface according to the present invention, and is pressed down so that the guide wheels touch the surface. In this way the preset force acting upon the test disc is fully effective on the test surface. The instrument is now moved into the rolling direction the wheels over the specimen to be tested e.g. against, for example, scale lines. The selected speed was ca. 10 cm/s. The test result is expressed by the test force in Newton (N) at which the adhesion of the said coating failed. For scratch resistance tests of surfaces against "blunt" effects the test result is the maximum force in Newton (N) at which the test body does not leave any race on the said coating surface.

Scratch hardness test is additionally performed using Erichsen Scratch Hardness Tester Model 291 according to Wolff-Wilborn. The pencil points are sharpened so that the grapgite point protrudes about 5 mm. The pencil is clamped into the holder block so that so that the grapgite point protrudes about 5 mm. The tester is placed on the plate surface according to the present invention. The hubs of the wheels are held with the thumb and forefinger and the instrument is moved over the said surface in the direction the pencil point shows at a speed of about 10 cm/s. The appropriate pencil hardness is established empirically. Even the pencil with a hardness of 9H wrote on the said surface without scratching.

The Non-stick effect is tested according to the method explained below. Two similar pans according to the present invention were used. One of the said pans was subjected to the below procedure, the second one was kept aside for reference comparing the paper wiping ease.
1. The coated pan is heated to 180-200 deg.C.
2. An egg is fried in the said plate on both sides (15 min)
3. The said egg is removed, the pan surface is wept with paper
4. The surface is observed for organic residues on it,
5. The same procedure is repeated until wiping with paper gets significantly more difficult compared to the reference pan.

The cross-cut adhesion test is performed using Erichsen Multi-Cross cutter Model 295, according to ASTM D 3359. The solid material loss on the surface after the test was less than 5%, which corresponds between 4-5 B according to the relevant adhesion classification.

Thermal resistance test is performed by subjecting the metalware to 320 deg.C of temperature for 30 minutes. No visible defects are observed on the coating surface.

Chemical resistance test is evaluation of the appearance of the coating surface after keeping the coated metalware for 15 minutes in acidic and alkali solutions with pH-values of 2 and 12, respectively, followed by rinsing with water.

Hydrophobicity and oleophobicity tests here are done by measuring the contact angles between the horizontal coating surface and natural sized (under laboratory conditions) passive drops of deionized water and sunflower oil, respectively. Namely the projection of the contact angle between the metalware surface and the passive drop surface is measured.

The heat transfer performance of abovementioned example formulation was compared with several coatings applied on metallic surfaces of same geometry and material. The samples were placed on a PID-controlled heated magnetic stirrer surface set to 250 deg.C. The heating was started from laboratory temperature, 25 deg.C. The surface temperature were measured with IR thermometer (Trotec GmbH & Co. KG, model Pyrometer TP6) and recorded every 10 seconds for duration of 300 seconds, and then the sample is removed from the heater for cooling. This procedure was repeated three times for each sample, and every repetitive temperature value for certain measurements was used in calculating arithmetic mean values.

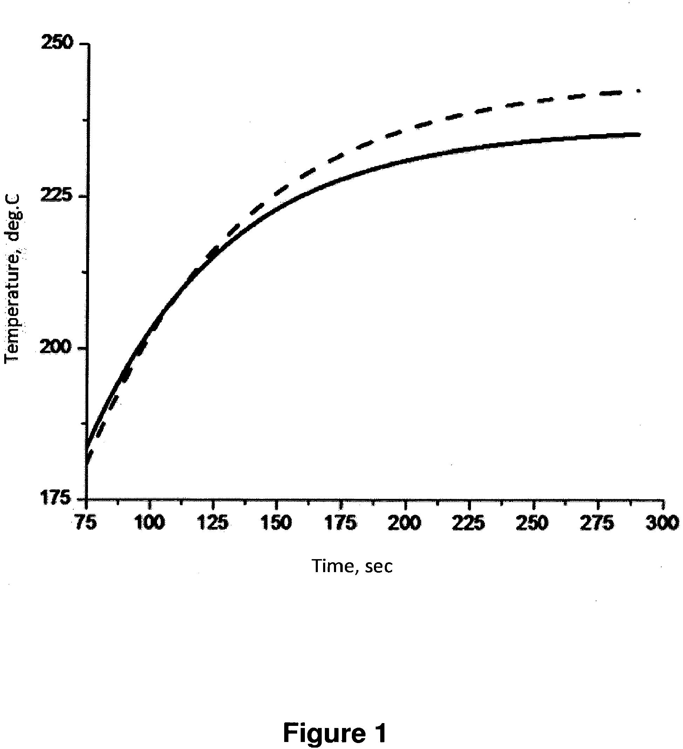

A comparative example described in EP 2 177 580 B1 (paragraph 34) to clarify the heat transfer performance of the coating according to the present invention. The heat transfer performance of the coating according to the abovementioned example formulation was found to be higher especially between 215 and 240 deg.C of temperatures (Fig. 1), compared to the one-layer ceramic coating according to the comparative example. In Fig 1, the dashed spline curve represents the surface temperature of the coated metalware according to the present invention, where the solid spline curve represents the surface temperature of the coated surface according to the comparative example from EP 2 177 580 B1.

The above formulation and procedure, according to the method and metalware of the present invention was fulfilled the target physical and chemical properties of the final product with respect to the abovementioned test results. Additionally, the described coating formulation and method is also suitable to fulfill the qualities expected from several types of devices comprising metallic surfaces for use in elevated temperatures, e.g. iron sole plates.

## Claims

1. A metalware, where the surface thereof is coated with a layer which is a hydrolysis and polycondensation product of a composition comprising tetraethoxy silane (TEOS), methyl trimethoxy silane (MTMS), dimethyl siloxane (DMS), inorganic filler and polar solvent **characterized in that** the said composition comprises 1,3-dialkyl imidazolium alkyl sulfate.

2. A metalware according to claim 1, wherein the 1,3-dialkyl imidazolium alkyl sulfate is 1-Ethyl-3-methylimidazolium methyl sulfate.

3. A metalware according to claim 1, wherein the said dimethyl siloxane is preferably a silanol-terminated polydimethyl siloxane (SiOH-terminated PDMS).

4. A metalware according to claim 1, wherein the said metal is selected from the list comprising stainless steel, aluminum and alloys thereof in which aluminum is the principal or predominant ingredient.

5. A metalware according to claim 1, wherein the said polar solvent comprises at least one of the solvents selected from the group consisting of water, ethanol and methanol.

6. A metalware according to claim 1, wherein the said inorganic filler comprises at least one of the materials selected from the group consisting of silicon carbide, boron carbide, boron nitride and oxides of silicon, titanium, aluminum, iron, manganese and cupper.

7. A metalware according to any of the preceding claims, wherein the said coating composition comprises the following (w/w):
| | |
|---|---|
| - 1-Ethyl-3-methylimidazolium methyl sulfate | 0.3-1.5 % |
| - DMS | 1.0-2.5 % |
| - MTMS | 25-40 % |
| - TEOS | 10-15 % |
| - Inorganic filler | 10-70 % |
| - Solvent | Complementary amount |

8. A metalware according to any of the preceding claims, where the said composition further comprises at least one inorganic pigment.

9. A method for producing a metalware, comprising the steps of:
- Providing a base material in form of a metalware having a roughened and clean metallic surface,
- mixing and stirring of a coating composition comprising tetraethoxy silane (TEOS), methyl trimethoxy silane (MTMS), dimethyl siloxane (DMS), a polar solvent, inorganic filler and 1,3-dialkyl imidazolium alkyl sulfate,
- grinding the said composition,
- applying the said coating composition on the said metallic surface,
- ageing of the coating composition on coated metallic surface under ambient conditions,
- polycondensation of the said coating by heat treatment on said metallic surface.

10. A method according to claim 9 wherein the heat treatment is carried out in a furnace operated at a temperature ranging from 270 to 500 °C, preferably in the range of 285-330°C with gradual heating.

11. A method according to claim 9 wherein the 1,3-dialkyl imidazolium alkyl sulfate is 1-Ethyl-3-methylimidazolium methyl sulfate.

12. A method according to claim 9, wherein the said dimethyl siloxane is preferably a silanol-terminated polydimethyl siloxane (SiOH-terminated PDMS).

13. A method according to claim 9, wherein the said metal is selected from the list comprising stainless steel, aluminum and alloys thereof in which aluminum is the principal or predominant ingredient.

14. A method according to claim 9, wherein the said polar solvent comprises at least one of the solvents selected from the group consisting of water, ethanol and methanol.

15. A method according to claim 9, wherein the said inorganic filler comprises at least one of the materials selected from the group consisting of silicon carbide, boron carbide, boron nitride and oxides of silicon, titanium, aluminum, iron, manganese and cupper.

16. A method according to claim 9, wherein the said coating composition comprises the following (w/w):
| | |
|---|---|
| - 1-Ethyl-3-methylimidazolium methylsulfate | 0.3-1.5 % |
| - DMS | 1.0-2.5 % |
| - MTMS | 25-40 % |
| - TEOS | 10-15 % |
| - Inorganic filler | 10-70 % |
| - Solvent | Complementary amount |

17. A cook-, fry- and/or bakeware comprising the metalware according to claim 1.

18. An iron sole plate comprising the metalware according to claim 1.

## Patentansprüche

1. Metallgegenstand, dessen Oberfläche mit einer Schicht beschichtet ist, die ein Hydrolyse und Polykondensationsprodukt einer Zusammensetzung ist, umfassend Tetraethoxysilan (TEOS), Methyltrimethoxysilan (MTMS), Dimethylsiloxan (DMS), einem anorganischen Füllmaterial und einem polaren Lösungsmittel, **dadurch gekennzeichnet, dass** die Zusammensetzung 1,3-Dialkyl-imidazol-alkylsulfat umfasst.

2. Metallgegenstand gemäß Anspruch 1, bei der das 1,3-Dialkyl-imidazol-alkylsulfat 1-Ethyl-3-methylimidazol-methylsulfat ist.

3. Metallgegenstand gemäß Anspruch 1, bei der das Dimethylsiloxan vorzugsweise ein silanol-terminiertes Polydimethylsiloxan ist (SiOH-termininertes PDMS).

4. Metallgegenstand gemäß Anspruch 1, bei der das Metall ausgewählt ist aus der Liste umfassend Edelstahl, Aluminium und Legierungen davon, in denen Aluminium der hauptsächliche oder überwiegende Bestandteil ist.

5. Metallgegenstand gemäß Anspruch 1, bei der das polare Lösungsmittel wenigstens eines der Lösungsmittel umfasst, gewählt aus der Gruppe bestehend aus Wasser, Ethanol und Methanol.

6. Metallgegenstand gemäß Anspruch 1, bei der das anorganische Füllmaterial wenigstens eines der Materialien umfasst, ausgewählt aus der Gruppe gebildet durch Siliziumcarbid, Borcarbid, Bornitrid, und Oxide von Silizium, Titan, Aluminium, Eisen, Mangan und Kupfer.

7. Metallgegenstand nach irgendeinem der vorherigen Ansprüche, bei dem die Beschichtungszusammensetzung das Folgende (Gewicht/Gewicht) umfasst:
| | |
|---|---|
| - 1-Ethyl-3-methylimidazol-methylsulfat | 0,3-1,5% |
| - DMS | 1,0-2,5% |
| - MTMS | 25-40% |
| - TEOS | 10-15% |
| - anorganisches Füllmaterial | 10-70% |
| - Lösungsmittel | ergänzender Betrag |

8. Metallgegenstand nach irgendeinem der vorherigen Ansprüche, bei dem die Zusammensetzung weiter umfasst wenigstens ein anorganisches Pigment.

9. Verfahren zur Herstellung eines Metallgegenstands, umfassend die Schritte:
- Zur Verfügung stellen eines Basismaterials in Form eines Metallgegenstands mit einer aufgerauten und sauberen Oberfläche,
- Mixen und Rühren einer Beschichtungszusammensetzung umfassend Tetraethoxysilan (TEOS), Methyltrimethoxysilan (MTMS), Dimethylsiloxan (DMS), ein polares Lösungsmittel, ein anorganisches Füllmaterial und 1,3-Dialkyl-imidazol-alkylsulfat,
- Mahlen der Zusammensetzung,
- Auftragen der Beschichtungszusammensetzung auf die metallische Oberfläche,
- Altern der Beschichtungszusammensetzung unter Umgebungsbedingungen,
- Polykondensation der Beschichtung mittels thermischer Behandlung auf der metallischen Oberfläche.

10. Verfahren gemäß Anspruch 9, bei dem die thermische Behandlung in einem Ofen ausgeführt wird, betreiben bei einer Temperatur zwischen 270 und 500°C, vorzugsweise im Bereich von 285-330°C mit gradueller Erwärmung.

11. Verfahren gemäß Anspruch 9, bei dem das 1,3-Dialkyl-imidazol-alkylsulfat 1-Ethyl-3-methylimidazol-methylsulfat ist.

12. Verfahren gemäß Anspruch 9, bei dem das Dimethylsiloxan vorzugsweise ein silanol-terminiertes Polydimethylsiloxan ist (SiOH-termininertes PDMS).

13. Verfahren gemäß Anspruch 9, bei dem das Metall ausgewählt ist aus der Liste umfassend Edelstahl, Aluminium und Legierungen davon, in denen Aluminium der hauptsächliche oder überwiegende Bestandteil ist.

14. Verfahren gemäß Anspruch 9, bei dem das polare Lösungsmittel wenigstens eines der Lösungsmittel umfasst, gewählt aus der Gruppe bestehend aus Wasser, Ethanol und Methanol.

15. Verfahren gemäß Anspruch 9, bei dem das anorganische Füllmaterial wenigstens eines der Materialien umfasst, ausgewählt aus der Gruppe gebildet durch Siliziumcarbid, Borcarbid, Bornitrid, und Oxide von Silizium, Titan, Aluminium, Eisen, Mangan und Kupfer.

16. Verfahren gemäß Anspruch 9, bei dem die Beschichtungszusammensetzung das Folgende (Gewicht/Gewicht) umfasst:
| | |
|---|---|
| - 1-Ethyl-3-methylimidazol-methylsulfat | 0,3-1,5% |
| - DMS | 1,0-2,5% |
| - MTMS | 25-40% |
| - TEOS | 10-15% |
| - anorganisches Füllmaterial | 10-70% |
| - Lösungsmittel | ergänzender Betrag |

17. Ein Koch-, Brat- und/oder Backgegenstand umfassend den Metallgegenstand gemäß Anspruch 1.

18. Eine Bügeleisensohle umfassend den Metallgegenstand gemäß Anspruch 1.

## Revendications

1. Un article métallique, dont la surface est revêtue d'une couche d'un produit résultant d'une hydrolyse et d'une polycondensation d'une composition comprenant le tétraéthoxysilane (TEOS), le triméthoxyméthylsilane (MTMS), le diméthylsiloxane (DMS), une charge inorganique et un solvant polaire, **caractérisé en ce que** ladite composition comprend de l'alkylsulfate de 1,3-dialkylimidazolium.

2. Un article métallique selon la revendication 1, dans lequel l'alkylsulfate de 1,3 dialkylimidazolium est le méthylsulfate de 1-éthyl-3-méthylimidazolium.

3. Un article métallique selon la revendication 1, dans lequel ledit diméthylsiloxane est de préférence un polydiméthylsiloxane à terminaison silanol (PDMS à terminaison SiOH).

4. Un article métallique selon la revendication 1, dans lequel ledit métal est choisi dans la liste comprenant l'acier inoxydable, l'aluminium et leurs alliages dans lesquels l'aluminium est l'ingrédient principal ou prédominant.

5. Un article métallique selon la revendication 1, dans lequel ledit solvant polaire comprend au moins l'un des solvants choisis dans le groupe constitué par l'eau, l'éthanol et le méthanol.

6. Un article métallique selon la revendication 1, dans lequel ladite charge inorganique comprend au moins l'un des matériaux choisis dans le groupe constitué par le carbure de silicium, le carbure de bore, le nitrure de bore et les oxydes de silicium, titane, aluminium, fer, manganèse et cuivre.

7. Un article métallique selon l'une quelconque des revendications précédentes, dans lequel la composition de revêtement comprend les composés suivants (pds/pds):
| | |
|---|---|
| - méthylsulfate de 1-éthyl-3-méthylimidazolium | 0,3 à 1,5% |
| - DMS | 1,0 à 2,5% |
| - MTMS | 25 à 40% |
| - TEOS | 10 à 15% |
| - Charge inorganique | 10 à 70% |
| - Solvant | qsp100% |

8. Un article métallique selon l'une quelconque des revendications précédentes, dans lequel ladite composition comprend en outre au moins un pigment inorganique.

9. Un procédé de fabrication d'un produits métallique, comprenant les étapes consistant à:
- employer un matériau de base sous forme d'un article métallique ayant une surface métallique ruguosifiée et propre,
- mélanger et agiter une composition de revêtement comprenant le tétraéthoxysilane (TEOS), le méthyltriméthoxysilane (MTMS), le diméthylsiloxane (DMS), un solvant polaire, une charge inorganique et l'alkylsulfate de 1,3-dialkylimidazolium,
- broyer ladite composition,
- appliquer la composition de revêtement sur ladite surface métallique,
- vieillir, dans les conditions ambiantes, la composition de revêtement sur la surface métallique revêtue,
- polycondenser ledit revêtement par traitement thermique de ladite surface métallique

10. Un procédé selon la revendication 9, dans lequel le traitement thermique est effectué dans un four fonctionnant à une température allant de 270 à 500°C, de préférence dans la plage de 285 à 330°C avec un chauffage graduel.

11. Un procédé selon la revendication 9, dans lequel l'alkylsulfate de 1,3 dialkylimidazolium est le méthylsulfate de 1-éthyl-3-méthylimidazolium.

12. Un procédé selon la revendication 9, dans lequel ledit diméthylsiloxane est de préférence un polydiméthylsiloxane à terminaison silanol (PDMS à terminaison SiOH).

13. Un procédé selon la revendication 9, dans lequel ledit métal est choisi dans la liste comprenant l'acier inoxydable, l'aluminium et leurs alliages dans lesquels l'aluminium est l'ingrédient principal ou prédominant.

14. Un procédé selon la revendication 9, dans lequel ledit solvant polaire comprend au moins l'un des solvants choisis dans le groupe constitué par l'eau, l'éthanol et le méthanol.

15. Un procédé selon la revendication 9, dans lequel ladite charge inorganique comprend au moins l'un des matériaux choisis dans le groupe constitué par le carbure de silicium, le carbure de bore, le nitrure de bore et les oxydes de silicium, titane, aluminium, fer, manganèse et cuivre.

16. Un procédé selon la revendication 9, dans lequel, dans lequel la composition de revêtement comprend les composés suivants (pds/pds):
| | |
|---|---|
| - méthylsulfate de 1-éthyl-3-méthylimidazolium | 0,3 à 1,5% |
| - DMS | 1,0 à 2,5% |
| - MTMS | 25 à 40% |
| - TEOS | 10 à 15% |
| - Charge inorganique | 10 à 70% |
| - Solvant | complément |

17. Un ustensile pour cuire, frire et/ou rôtir comprenant l'article métallique selon la revendication 1.

18. Une semelle en fer pour équipement ménager comprenant l'article métallique selon la revendication 1.
